Europäisches Patentamt

European Patent Office

Office européen des brevets

(11) Publication number: **0 169 548**
**A2**

(12) **EUROPEAN PATENT APPLICATION**

(21) Application number: **85109225.4**

(22) Date of filing: **23.07.85**

(51) Int. Cl.⁴: **H 04 L 11/16**
**H 04 L 27/00**

(30) Priority: **24.07.84 US 633936**

(43) Date of publication of application:
**29.01.86 Bulletin 86/5**

(84) Designated Contracting States:
**BE DE FR GB IT LU NL SE**

(71) Applicant: **Universal Data Systems, Inc.**
**5000 Bradford Drive**
**Huntsville Alabama 35805(US)**

(72) Inventor: **Burch, Richard A.**
**176 Dexter Circle**
**Madison Alabama 35758(US)**

(72) Inventor: **Cain, Roger W.**
**2613 Lancelot Drive**
**Huntsville Alabama 35803(US)**

(74) Representative: **EGLI-EUROPEAN PATENT ATTORNEYS**
**Widenmayerstrasse 5**
**D-8000 München 22(DE)**

(54) **Method and apparatus for automatically identifying a responding modem in a multi-drop network.**

(57) A high-speed communication system having one master and several remote modems, wherein each remote modem is identified to the master modem by an encoded identification signal. The receipt of the remote modem identification signals by the master modem permits rapid establishment in the master modem of system operating parameters unique to each respective remote modem. The parameters of modems in the system of the present invention include equalizer coefficients and receiver parameters acquired during the first transmission between the master modem and each respective remote modem. The parameters and coefficients acquired by the master modem are then stored in the master modem for the particular remote modem according to remote modem as identified by the encoded identification signal within or after the equalizer training sequence signal transmitted by the remote modem. For subsequent transmissions, the particular remote modem is identified by an encoded identification signal comprising a unique signal sequence which is transmitted during a time inerval reserved for modem identification prior to transmission of data, and the training sequence is thereafter significantly shortened or in part eliminated. Thereafter, previously acquired equalizer and receiver parameters for the corresponding identified modem being restored, and the data transfer can rapidly commence without invoking an extended training period for each transmission. The master modem, according to the received identification signal, selects the corresponding parameters stored for the particular remote modem, are restored, and the master modem receiver is rapidly adjusted.

./...

FIG. 2

## FIELD OF THE INVENTION

The present invention relates to high-speed modems, in particular high-speed modems used in multi-point polling network applications.

## BACKGROUND OF THE INVENTION

In one form of multi-point communication network, a master station polls a number of dependent remote or slave stations. When the telecommunications system includes modems, the modem of the master station transmits its carrier continuously and is received by each remote station modem, which then demodulates the data sent and transfers the demodulated data to the connected data terminal equipment (DTE). As the master station polls a corresponding remote station, and the polled DTE responds to the poll signal from the master, the corresponding remote modem must first turn on its carrier and establish a communication channel to the master station. Once the particular remote station modem becomes active, the master station modem must detect the carrier of the remote modem, extract receiver timing signals, set internal amplifier gain parameters, and compute the modem equalizer values to compensate for the transmission path to the particular active remote modem. However, since each modem communication channel may have a separate and distinct path or connection, resulting in a different set of corresponding phase and amplitude response characteristics, the master station modem must compensate for each modem signal path individually. Each master-remote communication channel requires the connected modems to begin a sequence of training signals to allow the respective modem receivers to acquire the necessary parameters and coefficients before each transfer of data. However, each training sequence occupies a significant portion of the time which could be otherwise used for data communication. The portion of transmission time consumed for receiver training becomes even more costly for transmission of short periods of data from different remote modems, resulting in the severely reduced effectiveness of the modem system and the entire data network.

## BRIEF DESCRIPTION OF THE INVENTION

The communication system of the present invention includes a plurality of high-speed modems connected in a multi-drop network having a central master modem and a plurality of remote modem units, wherein the communication between the master the individual remote modems is rapidly established to maximize the system efficiency. System efficiency is defined as the total transmission time relative to the actual data transmission time. The present invention increases the efficiency by minimizing the modem adjustment or training time of subsequent transmission. The master modem according to the present invention acquires receiver operating parameters and equalizer coefficients during an initial training sequence, and stores the parameters and coefficients thereafter in a memory location allocated for that particular remote modem. The master modem receiver parameters and equalizer coefficients are reinitialized from values stored in the corresponding memory location at the beginning of subsequent modem transmissions with the previously stored coefficients and parameters to be followed by a shortened training sequence for additional receiver adjustment. The master modem according to the present invention initially acquires the above-mentioned parameters and coefficients with improved accuracy by extending the initial training period before the transmission of data. The particular stored receiver parameters include carrier frequency offset and data timing frequency offset parameters. According to the present invention, an additional parameter is determined for each remote modem and stored for future use, which optimizes the receiver timing according to a difference between parameters acquired at different portions of the initial training sequence. During subsequent modem transmissions, the respective remote modem is identified by transmitted identification codes, several of the previously used equalizer coefficients and receiver parameters are restored. Thereafter, the master modem further acquires the remaining receiver parameters during a very brief training period. The parameters acquired during the brief training period in combination with the previously determined and stored $\Delta$ parameter achieve a high data accuracy with a minimum (brief) training period for each of the remote modems in communication with the master modem, which maximizes data transfer during the subsequent transmissions and improves the system efficiency.

In either of the implementations discussed below, the remote modems are identified by a clear number transmitted as the first data transmitted after the initial training period. In subsequent transmissions, a first implementation according to the present invention uses vector difference data to encode a unique identification signal sent by each respective remote modem during the short train interval. The identification signal is also simultaneously used to recover carrier phase information, necessary for proper receiver operation. The particular identification code may be one of twelve values, each of which are selected by a switch within each remote modem unit. The identification code is converted into a corresponding proportional time duration of the vector difference encoded carrier. In this way, the carrier serves both to identify the modem and to allow recovery of signals in the receiver section. The training sequence transmitted by the polled remote modem is partitioned into several segments. According to the present invention, the identification sequence begins after the second training segment with a presynchronzation time interval of 14 baud having a first data value. The identification code follows as a time duration of sustaining the first data value before the carrier signal is modulated with a second data value. The master modem receives the training sequence of the transmission containing the identification signals from the remote modem. The duration of the first signal is determined, and the corresponding code number is provided. The code number is represented by four binary bits to uniquely indicate which of the twelve remote modems is communicating. The detected identification code is also used by the receiving modem to select a receiver composite parameter memory in which the receiver parameters, corresponding to the remote modem, are stored. Upon subsequent transmission between the master modem and the same remote modem, the training period is shortened and the code number is used to recall the previously acquired parameters from among the corresponding previously stored equalizer coefficients and associated receiver parameters from the respective receiver composite parameter memory. The receiver is rapidly adjusted according to the recalled parameters and by the signal of the shortened training period, and the transfer of data then commences.

A second embodiment employs a unique tone or two-tone sequence preceding the short-train sequence to produce identification corresponding uniquely to one of the twelve remote modem units. The tones are within the band of signals transmitted by the respective transmitter sections of the remote modems and are detected within the band of signals detected by the receiving modem. The resulting identification signals are used by the receving modem to retrieve the respective equalizer parameters and receiver signals, as mentioned above. The system and method of remote modem identification according to the present invention of either embodiment permits rapid master modem receiver synchronization, and eliminates the long equalizer training, making efficient fast polling of many remote modems feasible.


## BRIEF DESCRIPTION OF THE DRAWING


These and other features of the present invention will be better understood by reading the solely exemplary detailed description, taken together with the drawing, wherein:

Fig. 1 is a block diagram of the multi-drop communication system;

Fig. 2 is a block diagram of one of the modems in the system shown in Fig. 1;

Fig. 3 is a block diagram of a modem demodulator;

Fig. 4 is a timing diagram showing modem tone code or time duration code identifications within the training sequence; and

Fig. 5 is a timing diagram showing the placement of modem identification after the training sequence.


## DETAILED DESCRIPTION OF THE INVENTION


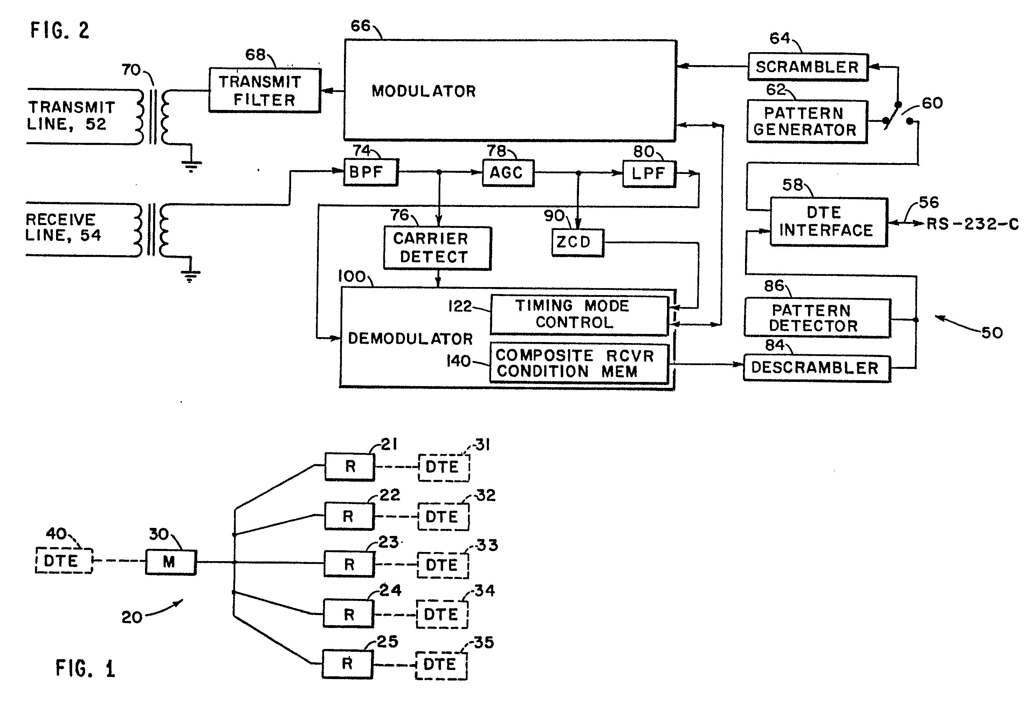

In the multi-drop network 20 shown in Fig. 1 according to the present invention, a master modem 30 polls a plurality of remote modems 21-25. Each of the remote modems is connected to a respective data terminal equipment 31-35, as is the master modem 30 connected to the master data terminal equipment 40. The master modem 30 transmits a carrier continuously on the network connection and is received by each of the remote modems 21-25. When data is transmitted by the master modem 30, each of the remote modems receives and demodulates the data, and passes it in turn to the respective data terminal equipment 31-35. In normal operation, one of the data terminal equipment 31-35 will respond to the data sent from the master modem, by transmitting information back to the master modem 30. To do so, the particular remote modem such as modem 23 must first turn on its carrier, send a training sequence, and respond to the master modem with data. Only one remote modem in the network may have its carrier on at any one time. In such an arrangement, the master modem 30 must detect the carrier, extract timing signals, set internal amplifier gain, and compute equalizer values to compensate for the different transmission paths for the particular modem sending the signal. The path for each remote modem will have different phase and amplitude distortions which are corrected by the equalizer having a particular set of parameters which correspond to a selected transmission path and the associated remote modem.

According to the present invention, each of the remote modems 21-25 provides a unique identification code to be received by the master modem 30, which in turn decodes the particular identification code. During the first transmission, the master modem 30 selectively adjusts the modem receiver and equalizer according to parameters determined from initial communication sequences as described above. The acquired receiver parameters and equalizer coefficients are stored in a multiple location composite receiver condition memory, wherein each location corresponds to a particular corresponding remote modem. Before a subsequent data transmission commences, an identification code is received from the communicating modem and decoded by the master modem 30; the receiver parameters and equalizer coefficients are retrieved from the receiver condition memory location corresponding to that modem and loaded into the appropriate receiver and equalizer registers. The master modem 30 is then rapidly adjusted for the transmission with the selected remote modem having eliminated much of the time needed to retrain the master modem receiver.

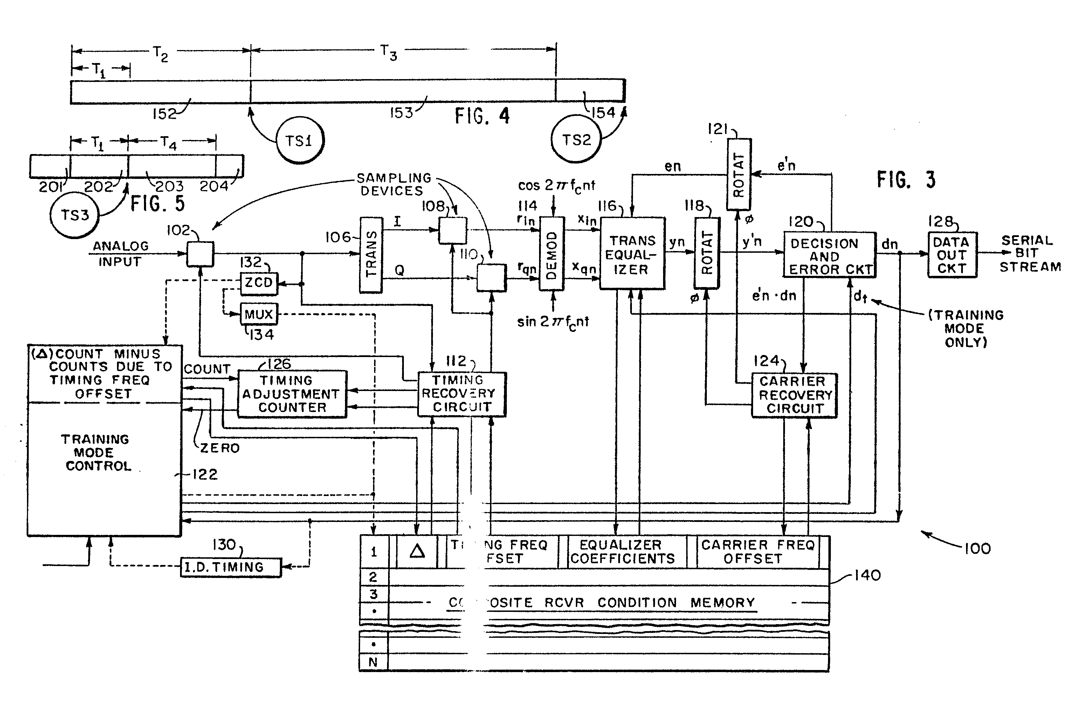

The modem 50 of the present invention according to the block diagram shown in Fig. 2 may be used as either a master modem 30 or one of the remote modems 21-25 of Fig. 1. However, the master modem 30 is distinguishable from the remote modem 21-25 by a composite receiver memory 140 included in the demodulator 100, shown in Fig. 3, having additional memory locations therein, the operation being discussed below. A four-wire telephone connection is made to the transmit line pair 52, and the receive line pair 54; the data terminal equipment (DTE) is connected to the RS-232 connection 56. The modem circuit provides the proper encoding and decoding of the signals between the above-identified signal connections. The transmitted signal is generated by the signal received from the DTE through the DTE interface 58 which provides a digital signal of the particular logic levels used in the hardware of the present invention. A switch 60 selects between a pattern signal generated by a pattern generator 62, which is energized for a modem training sequence, and the data signal from the DTE interface 58 after the training sequence is complete. The resulting selected signal is scrambled by scrambler 64 according to a known pseudo-random code to provide proper spectral energy distribution in the modem to allow for coherent recovery of the quadrature amplitude modulation (QAM) signal, according to techniques known in the art. The resulting signals are received by a modulator 66 which produces a QAM output according to the control of the demodulator processor 100 discussed below, which acts as the master control of the modem 50. The signal output from the modulator 66 is filtered by a transmit filter 68, providing a band limited signal which is connected through the impedance matching transformer 70 to the transmit line pair 52 of the telephone system.

In the modem block diagram of Fig. 2, a QAM signal is received from the telephone system on the receive line pair 54 through the transformer 72, and is filtered by a band-pass filter 74. A carrier is detected by circuit 76, which indicates to the demodulator processor 100 the presence of a received carrier. The amplitude of the filtered carrier is controlled by an AGC circuit 78 and again filtered by a low-pass filter 80. The resulting signal is then processed by a phase-splitting circuit 82 to provide an in-phase (I) and quadrature (Q) signal, which are received by the demodulator processor 100. The demodulator processor 100 includes the equalizers and the received control circuitry, and is discussed in more detail in reference to Fig. 3, below. The demodulator processor provides a digital signal output which is descrambled by a descrambler 84, which provides a decoding function complementary to the encoding function of the scrambler 64 described in regards to the receive section. The resulting signal from the output of the descrambler 84 is a signal corresponding to the data received from the DTE by the modem transmitter of the other (not shown) modem communicating with this modem. A pattern detector 86, controlled by the demodulator processor 100 detects the pattern used in the data training sequence, discussed further below. The descrambler output is in turn converted to the RS232 format through the DTE or data terminal equipment interface 58, to be sent to the respective equipment on the connection 56.

More specifically, the modem of the present invention provides a method and device for training the equalizer of a master modem 30 QAM demodulator (receiver) 100 of Fig. 3, such that after an initial training sequence, such as shown in Fig. 4, and an initial data transfer have taken place, a very short subsequent turn-on sequence, such as shown in Fig. 5, may be used for successive data transmissions. During the initial training sequence, equalizer parameters and several receiver parameters, including a timing epoch difference parameter $\Delta$ which corresponds to the difference between the different values determined for the timing epochs $\tau$ and $\tau'$, are accurately acquired and stored for use in the succeeding data transmissions. A detailed description of a modem having training using stored parameters and coefficients, including $\Delta$, is provided in a patent application entitled "Modem Equalizer Training Using Previously Stored Parameters," filed on or about February 22, 1984.

The amount of difference or adjustment $\Delta$ is a function of the transmission line characteristics, and may vary over the range of dial-up telephone lines. According to the present invention, which includes an equalizer having taps spaced at T sampling instants, the determination of the difference $\Delta$ is critical to the success of training for that equalizer.

In accordance with the method of the present invention, equalizer coefficients, timing frequency offset, carrier frequency offset, and timing epoch difference $\Delta$ parameters, discussed below, are all stored in a particular location of a composite receiver condition memory 140 during an initial data transfer which includes an initial training sequence, the location corresponding to the received and decoded identification code of the remote modem. Subsequently, when the data channel is again used, the particular modem is identified, and the corresponding receiver and equalizer parameters and timing epoch difference $\Delta$, are restored, and a short turn-on sequence is used to again recover an initial timing epoch $\tau$ (during a preamble) which is added to difference $\Delta$ to provide the revised epoch $\tau'$. The carrier phase parameter for the modem receiver is also recovered during the remainder of the short-train period in advance of the ensuing data transmission.

The initial training sequence, shown in Fig. 4, which comprises a preamble with strong spectral components at the band edges, during which $\tau$ is acquired, followed by a pseudo-random signal of length sufficient for equalizer training by gradient methods to determine a revised epoch $\tau'$. The initial train preamble is sufficiently long to completely acquire the timing frequency offset, so that the revised timing epoch $\tau'$ can be simply and accurately measured (as discussed below) during the pseudo-random signal period. On subsequent communications, the

epoch $\tau$ is again acquired and the revised epoch $\tau'$ is then restored by adding $\Delta$ to the epoch $\tau$. Since the equalizer coefficients are initially selected for a timing epoch adjusted by difference $\Delta$, the receiver is rapidly optimized after the subsequent short-train periods. As a result, the invention allows the use of a significantly shortened turn-on sequence in subsequent data transfers providing low error rates, minimal added hardware, and substantial savings of time required for receiver adjustment.

The general operation, excluding operation with respect to $\tau$ and $\Delta$ and storage of parameters and coefficients are described as follows. The signal received from the transmission channel, such as a telephone line 52 is amplitude-normalized by an automatic gain control (AGC) circuit 78, and filtered by a bandpass filter 80, which rejects the out-of-band noise. The resulting signal is received by a sampling device 102 which provides signal samples at the rate $1/s$ per second. The rate $1/s$ is selected to equal a multiple $m/T$ (where $m = 4$ in this embodiment) of the signalling instants (baud rate) $1/T$ so as to provide a number of signal samples at the output of the sampling device 102 to enable the sequence of signal samples to sufficiently describe the received signal (which when detected is represented by $d_n$) for the subsequent processing, described below. The signal is then received by a Hilbert transformer 106. The Hilbert transformer 106 is generally known as a device which has one signal input and two quadrature signal outputs, providing at its outputs the in-phase and quadrature components, respectively, of the input signal.

The in-phase (I) and quadrature (Q) output signal from the Hilbert transformer 106 are respectively sampled at the signalling rate $1/T$ by I and Q sampling devices 108 and 110, respectively. A clock timing recovery device 112 is connected to receive the output signal of the analog-to-digital converter (ADC) 104 and to control the sampling device 102, the I and Q sampling devices 108 and 110, and other components (not shown) of the receiver 100. The individual above-mentioned sampling devices, ADC, AGC, and clock recovery device as known in the art as used, and the details of the embodiments of the individual devices are not discussed here.

The digitized I and Q signal components, respectively provided at the outputs of the sampling devices 108 and 110 of the received signal, are applied to the signal inputs of a complex demodulator 114. The complex demodulator 114 receives from a local source (not shown) an in-phase carrier of the form $\cos 2\pi f_c nT$ and a quadrature carrier of the form $\sin 2\pi f_c nT$, where $f_c$ is the carrier frequency and n is a positive integer the value of which ranges from zero to infinity. If the signal is received at the signalling instant nT, designated $r_n$, the I and Q components, at the outputs of the sampling devices 62 and 64, are expressed as $r_{i,n}$ and $r_{q,n}$, respectively. The demodulator 68 then provides sampled I and Q components $x_{in}$ and $x_{qn}$, respectively, of the demodulated signal $x_n$. The complex numbers $x_n$ then pass through a complex equalizer 116, which includes a tapped delay line, generally known in the art. The delay line signals received from N taps are weighted and summed to produce a signal according to complex arithmetic, wherein the N tap weighting coefficients which are digital complex numbers that are stored in the equalizer and characterize the equalizer 116.

The resulting complex equalizer 116 output signal $y_n$, which includes in-phase, $y_{in}$, and quadrature, $y_{qn}$, components, is then adjusted by circuit 118 for the phase difference θ, between the local clock, $f_c$, and the received carrier frequency based on the output, θ, of the carrier recovery circuit, which provides rotation of complex signal $y_n$ through the angle θ to produce the phase-locked complex equalizer output signal $y'_n$. Finally, the equalized and rotated output signal $y'_n$ is entered into a decision-and-error circuit 120, which has two modes of operation. In data mode, the decision-and-error circuit 120 determines which complex data signal $d_n$ was sent by the remote transmitter (not shown), and then computes the corresponding complex apparent error signal: $e'_n = y'_n - d_n$, which is received by the equalizer 116 after rotation by rotation element 121. During training mode (initial adjustment of the equalizer), the transmitter sends known, predetermined data signals in an initial training sequence before the data, which are also simultaneously generated with the receiver by a training mode control circuit 122 as signals $d_t$, where $d_t = d_n$. The error signal $e'_n$ is computed and then used to adjust carrier recovery circuit 124 and to adjust the equalizer 116 tap coefficients $c_k$. The complex signals $d_n$ corresponding to the transmitted data, and are subsequently converted to a serial bit stream in a data out circuit for delivery to the user. The recovered receiver parameters and equalizer coefficients are stored in a location of composite receiver condition memory corresponding to the remote modem currently transmitting to the master receiver 30, identified according to the embodiments according to the present invention, discussed below.

The initial adjustment of the receiver 100, particularly with regard to the timing epoch $\tau$ and difference $\Delta$ is described as follows: A remote transmitter (not shown) sends a very simple first segment of the signal preamble 152 having strong spectral components at the band edges of the transmitted spectrum. The AGC circuit 78 of Fig. 2 is initially put into a fast attack, high-gain mode and quickly establishes the proper signal level for the receiver 100. The receiver 100 carrier recovery circuit 124 detects the appearance of received signal energy and causes the receiver 100 to start its initialization and training procedure with a start-up sequence discussed with respect to Fig. 4. The timing recovery circuit 112 uses the strong band-edge spectral components to make an initial determination of a best sample timing epoch, $\tau$. The carrier recovery circuit 112 may also initialize the carrier phase and frequency at this time, although it is not necessarily required in a QAM system with a complex equalizer since the complex equalizer itself is capable of acquiring the carrier phase. According to the normal sequence of signals in the initial training sequence, the remote transmitter then changes to a pseudo-random training pattern 154, Fig. 4, used to train the equalizer. The sample timing epoch $\tau$ is revised during the pseudo-random sequence to provide a new sample timing epoch $\tau'$ to which the equalizer coefficients are uniquely matched, the difference being a value $\Delta$, which is also unique to each remote modem, and separately stored in memory 140.

The revised sample timing epoch $\tau'$ provides a basis on which to determine the effective sampled-data frequency response of the channel, for which the equalizer has been trained to equalize. The resulting trained set of optimized equalizer coefficients extant at the end of the pseudo-random sequence is uniquely matched to the revised sampling epoch $\tau'$ for each remote modem. According to the present invention, this unique matching of revised timing epoch $\tau'$ and equalizer coefficients for each remote modem is uniquely preserved in a separate location memory 140 by calculation and storage of difference $\Delta$, to allow a shorter subsequent turn-on sequence, called "short train," for further data transmissions on the same transmission circuit.

Moreover, derivative terms of higher-than-first-order phase-locked loops such as the timing and carrier recovery loops of timing recovery circuit 126 and carrier recovery circuit 124 of the particular receiver 100 embodiment, typically require many symbol periods during the initial training sequence to be accurately acquired. The details of the phase-locked loops are not critical to the use of $\Delta$ in the present invention, and such details are not included herein. The derivative terms are also saved in memory 140 corresponding to each remote modem during the initial training sequence and restored in the short-train sequence to reduce or eliminate the time to reacquire them. Therefore, in the preferred embodiment, receiver timing frequency offset and carrier frequency offset, together with equalizer coefficient and an epoch difference $\Delta$ acquired at the end of an initial train, are stored in a particular memory 140 location to be used to recompute the revised timing epoch $\tau'$ (after acquiring $\tau$ during the beginning of subsequent short-train sequences). The stored data is then restored at the beginning of a short turn-on sequence according to a decoded received remote modem code.

A timing diagram of the initial training sequence according to this invention is shown in Fig. 4. Period 152 represents the preamble having strong spectral components at the band edges to allow rapid acquisition of the timing epoch $\tau$ during period $T_1$, and to allow acquisition timing frequency offset, and carrier frequency offset signal data. In the preferred embodiment, the duration of time $T_1$ is limited to the shortest time possible in which to repeatably acquire timing epoch $\tau$ by the timing recovery circuit to within $\pm 2\%$ of the symbol interval T. The total duration time $T_2$ of period 152, typically two seconds, is a time sufficient for complete acquisition of timing frequency offset. Also, the carrier frequency offset may be acquired during period 152. Period 153, typically one second, represents the pseudo-random sequence for equalizer training and carrier phase acquisition. At the conclusion of period 153, the timing epoch $\tau$ has been revised to $\tau'$, and the difference $\Delta$ is determined and stored.

A modem identification number 154 is transmitted immediately after the initial pseudo-random data training segment 153, just before actual data transmission commences, which is used by the training mode control 122 to select the location 1,2,3,...N in composite receiver condition memory 140 in which to store the modem receiver (demodulator) 100 parameter and coefficient values.

The training mode control 122 counts the data symbol times after receiving a signal generated by carrier detect circuit 76 in response to the incoming initial signal. When sufficient data symbol times have occurred and time $T_2$ has elapsed, an event TS1 occurs by the training mode control wherein the timing adjustment counter 126 is reset to zero, and the sampling period T is allowed to incrementally change according to the timing recovery circuit 112 which increments or decrements the timing adjustments counter 126. When the timing recovery circuit evokes an incremental increase response in the sampling period T, the timing adjustments counter 126 counts up. When the timing recovery circuit evokes an incremental decrease response in the sampling period, the timing adjustments counter 126 counts down.

For a given timing frequency offset condition acquired during period 152, the timing recovery circuit 112 will command a fixed number of adjustments in compensation for timing frequency offset alone during period 153. Any other adjustments are attributable to a revised (optimized) timing epoch $\tau'$ during period 153. On expiration of time T3, sufficient for training of the adaptive equalizer (and acquiring carrier phase) the training mode control stores equalizer coefficients, carrier frequency offset, and timing frequency offset into the composite receiver condition memory location indicated by the number received during period 154. The training mode control 122 then converts the timing frequency offset signal data into an equivalent number of timing adjustment increments over a duration T3 and modifies the count output of a timing adjustments counter 126 to determine the number of timing adjustment increments, which comprise the timing epoch difference $\Delta$. The difference $\Delta$ is then stored in a particular location 1,2,3,...N of composite receiver memory 140 for use in the short-train start-up. Period 152 must be sufficiently long (typically two seconds) to acquire timing frequency offset, so that the conversion to an equivalent number of timing adjustment increments would have enough resolution to allow an accurate calculation of difference $\Delta$.

A first system and method of modem identification during the short-train interval is shown in Fig. 5, wherein the identification is determined by a time interval between particular data signals or vectors. The identification sequence according to a first embodiment occurs after the segment 202 training sequence and before the data. According to the system of the present invention, the signals are transmitted in two-bit or dibit pairs for each baud interval. At the end of segment 202, a presync interval 203 of 10-14 baud will be transmitted with an I and Q value of 0,-1. The time interval is detected between two predetermined signals, the first of which is transmitted immediately after the presync signal of 0,-1. The first signal 204 comprises a signal of 0,-5 being transmitted for a duration of approximately 4 baud. The signal is received and detected by the demodulator which filters the output and provides a filtered response, the signal transition of which is then detected according to the peak of the filtered signal. The interval representing the encoded identifier signal is determined by the first and the subsequent signal peaks. Since the signal filtering obscures the exact transition time relating to the particular signal, a fixed offset of four baud intervals are added after the initial signal 0,-5 to allow the filtered detected signal to decay to a lower value which facilitates signal detection. Thereafter, the system awaits the transition from 0,-5 to 0,-1 which produces the second signal defining the end of the time period. The transition may occur immediately after the first four baud interval signals of 0,-5, or may be extended for X (arbitrary) number of baud intervals. An identification is then determined directly according to the number of X relating to the duration for the time interval determined by the identification timing element 130. Since this approach requires recovered baud timing and carrier phase, the identification segment must occur after segment 2, which provides the necessary receiver synchronization and parameter adjustment.

A second method of modem identification according to the present invention is also shown in Fig. 3, employing tone frequency encoded identification 201 code, the receiver further includes an external zero crossing detector 90, shown in Fig. 2, or zero crossing detector 132 within the receiver 100, producing a periodic signal according to the zero crossing of the signal produced by the automatic gain control section 78. This signal is in turn received by a memory multiplex control 134 to select the particular location of the memory 140 from which to retrieve the receiver parameter and equalizer coefficients. The periodic signal is then used to determine the particular frequency being received. The typical frequencies used in this approach is shown now in Table I below:

| Modem | Hz |
|-------|---------|
| 1 | 696.77 |
| 2 | 780.72 |
| 3 | 875.67 |
| 4 | 967.16 |
| 5 | 1062.30 |
| 6 | 1178 |
| 7 | 1296 |
| 8 | 1440 |
| 9 | 1620 |
| 10 | 1851.43 |
| 11 | 2160 |
| 12 | 2492.31 |

In embodiments using the 12 tones listed above, each of the 12 tones corresponds to a particular modem; the tones are decoded by the microprocessor within the demodulator 100 to produce a corresponding unique identification value. The tones listed in the Table I above were chosen according to the following criteria. The lower tones were spread to improve noise immunity, and to reduce the errors arising from telecommunication translation errors, which typically amount a deviation of ± 10 Hz, plus the associated group delay. The upper tones were limited to 2500 Hz, which is the maximum frequency that can be readily accommodated by the system bandpass. The intermediate tones were then chosen downwards from the upper limit of 2500 Hz. The processor 106 includes a counter or timer which detects the periodic signals produced by the zero crossing detector 90, to produce the identification signal corresponding to the frequency.

An alternate frequency selective identification approach comprises a sequence of two different tone sets, the first part being a selection of one of four tones, followed by a second part being one of three tones, providing the twelve possible combinations. The timing of the tone sequence 201 is shown in Fig. 5, where the first period of tones occurs immediately before the second segment 202 of the training sequence. The first tone sequence is selected among one of four frequencies, which lie typically within the range of frequencies shown in Table I, but not necessarily one of the twelve. The second set of tone identification frequencies is related to the first (base) frequency plus an offset frequency. The offset frequency may be zero, plus a fixed value or minus a fixed value, the value being typically less than the interval to the next adjacent base frequency. After a finite period of time, the second tone identifier begins. If the group delay is severe, the apparent transition period between the first and second frequency identifier may be delayed by up to 2 milliseconds or otherwise obscured, making the detection of the identification signal transition difficult and causing the second frequency identification to be indeterminate or inaccurate. By providing a slight deviation from a fixed-base frequency, the errors due to group delay, commonly known in telephone transmission, will be small and allow for accurate determination of a frequency relative to the base frequency by the zero crossing detection method. According to one embodiment of the present invention, in the two-part tone identification sequence, which typically lasts for a period of 10 milliseconds, a carrier is detected after the first 2.5 milliseconds.

The above solely exemplary embodiment, as well as modifications and substitutions made by those skilled in the art, are within the scope of the present invention, which is not to be limited except by the claims which follow.

0169548

C L A I M S

What is claimed is:

1. A multi-drop network, a method of automatic identification comprising the steps of:

selecting a first training segment;

receiving said first segment;

establishing a carrier frequency;

sending a first identification segment;

receiving said first identification segment;

receiving said first identification segment;

sending data; and

receiving data.

2. The method of claim 1, further including

sending a second identification; and

receiving a second identification code.

3. The method of claim 2, further including

sending a second timing segment signal; and

receiving the second timing segment signal.

4.     In a multi-drop network, a method of automatic identification comprising the steps of:

transmitting a first and second segment;

receiving said first and second timing segment;

receiving a first identification signal;

transmitting a second identification signal after a duration corresponding to the station identification;

receiving said first and second identification signals;

detecting the duration between the first and second identification signals; and

determining the identification according to said duration.

5.     In a multi-drop network, a method of identifying the remote modems to the master modem, comprising the steps of:

transmitting a first and second timing segment;

transmitting a first identification signal; and

transmitting a second identification signal after a duration of time corresponding to the remote modem identification number.

6.   In a multi-drop network, a method of identifying a remote modem to the master modem, comprising the steps of:

receiving a first and second timing segment;

-  receiving a first and second identification signal;

detecting the beginning of each of said first and second identification signals; and

determining the identification number according to the duration of time between the onset of the first and the onset of the second identification signals.

7. In a multi-drop network, a method of identifying a remote modem to the master modem, comprising the steps of:

transmitting a first training segment;

transmitting a first identification tone signal having a tone frequency corresponding to the identification number; and

transmitting a second tone signal.

8. In a multi-drop network, a method of identifying a remote modem to the master modem, comprising the steps of:

receiving a first tone signal;

receiving a first identification tone;

detecting the frequency of the first identification tone;

determining the identification number according to the frequency of the identification tone; and

receiving a second tone signal.

9. In a multi-drop network having quadrature phase-shift keying data signal transmission, a modem apparatus comprising:

tone decoder means providing a signal corresponding to the frequency of the received signal; and

demodulator means receiving the quadrature phase-shift keying data signal and the tone decoder output signal.

35

FIG. 2

FIG. 1

FIG. 4

$T_1$ $T_2$ $T_3$

152 153 154

TS1 TS2

FIG. 5

$T_1$ $T_4$

201 202 203 204

TS3

FIG. 3

SAMPLING DEVICES

ANALOG INPUT

102

106 TRANS

I

Q

108

110

132 ZCD

134 MUX

114 $r_{in}$

$r_{qn}$

DEMOD

cos 2πf_cnt

sin 2πf_cnt

$x_{in}$

$x_{qn}$

116 TRANS EQUAL-IZER

$y_n$

118 ROTAT

ø

$y'_n$

121 ROTAT

$e_n$ $e'_n$

ø

120 DECISION AND ERROR CKT

$d_n$

128 DATA OUT CKT

SERIAL BIT STREAM

$e'_n \cdot d_n$

$d_t$

(TRAINING MODE ONLY)

124 CARRIER RECOVERY CIRCUIT

112 TIMING RECOVERY CIRCUIT

126 TIMING ADJUSTMENT COUNTER

COUNT

(Δ)COUNT MINUS COUNTS DUE TO TIMING FREQ OFFSET

TRAINING MODE CONTROL

122

ZERO

130 I.D. TIMING

1 Δ TIMING FREQ OFFSET | EQUALIZER COEFFICIENTS | CARRIER FREQ OFFSET

2
3
COMPOSITE RCVR CONDITION MEMORY
N

140

100

2/2

0169548